# FASCICULE DE BREVET EUROPEEN

(11) **EP 0 357 763 B1**
(45) Date de publication et mention de la délivrance du brevet: **15.06.1994**
(21) Numéro de dépôt: 89903752.7
(22) Date de dépôt: 17.03.1989
(51) Int. Cl.: A01J 25/16, B29D 28/00, B29C 67/14

(54) **SUPPORT POUR LA FABRICATION DE FROMAGES**
KÄSEHORDE
SUPPORT FOR CHEESE MANUFACTURE

(30) Priorité: 17.03.1988 FR 8803762
(43) Date de publication de la demande: 14.03.1990
(73) Titulaire: SOUBEYRAT, Michel, F-38300 Bourgoin-Jallieu (FR)
(72) Inventeur: SOUBEYRAT, Michel, F-38300 Bourgoin-Jallieu (FR)
(74) Mandataire: Casalonga, Axel
(86) Numéro de dépôt international: FR8900118
(87) Numéro de publication internationale: WO8908385

(56) Documents cités:
- EP-A- 261 681
- DE-U- 1 952 252
- DE-U- 1 956 109
- FR-A- 1 233 221
- FR-A- 1 536 268
- FR-A- 2 411 259
- US-A- 3 755 054

## Description

La présente invention concerne un support perfectionné, en matériaux composites de préférence, pour l'acidification, le saumurage, l'affinage et le stockage des fromages.

Au cours de la fabrication des fromages, le caillé est soumis à un ensemble d'opérations aboutissant à une réduction de sa teneur en eau.

Le lactosérum très corrosif exsude de la matière première et doit être évacué rapidement, sa stagnation autour du fromage favorisant la germination d'une flore fongique nuisible.

Les explications et commentaires qui vont suivre s'appliquent plus particulièrement aux fromages à pâte cuite.

En phase d'acidification, le fromage, entouré d'une ceinture, est déposé sur un support en bois, généralement de forme ronde. Le bois ne favorise pas l'égouttage et tend à emprisonner le lactosérum sous le fromage, provoquant les inconvénients cités précédemment et tendant à supprimer le relief de la croûte provenant du moulage. On y remédie partiellement en retournant le fromage à plusieurs reprises, opération contraignante et onéreuse.

Après l'acidification, le fromage, reposant en général sur le même support inséré dans une palette, est plongé dans la saumure où il flotte en se plaquant sous le support supérieur. Ce contact empêche le libre circulation de la saumure et il s'ensuit un manque d'homogénéité de salage que l'on compense en augmentant la durée de saumurage.

Après le saumurage, le fromage passe en phase d'affinage. Il est alors transféré sur un support, le plus souvent en bois et de forme circulaire.

Pendant l'affinage, une partie de l'eau restant dans le fromage s'évapore. Un assèchement de la surface du fromage est ainsi provoqué, d'où résulte la dureté et la résistance de la croûte.

Le support en bois a l'inconvénient d'empêcher l'évaporation de l'eau de la face inférieure du fromage où l'humidité se concentre, rendant la croûte molle, adhérente et favorisant les moisissures et le développement des bactéries. On doit alors retourner le fromage de façon à ce que la surface humide se trouve au-dessus. Un emmental est ainsi retourné et brossé pour enlever les moisissures une dizaine de fois durant son affinage. Ces opérations coûteuses sont en outre pénibles lorsqu'elles sont effectuées manuellement, une meule d'emmental pesant entre soixante dix et quatre vingt kilogrammes.

Pour lutter contre ces inconvénients, des supports en tôle d'acier inoxydable perforée, d'un coût élevé, sont parfois utilisés. Leurs perforations ont tendance à se boucher par enlèvement de matière grasse arrachée par l'angle vif des rebords de perforations, lorsque les fromages sont poussés sur la surface du support. D'autre part, ces supports, réalisés en tôle mince pour des raisons d'économie, ont tendance a se déformer sous le poids des gros fromages.

D'autres supports en tôle d'acier perforée et plastifiée sont également utilisés. Leur durée de vie est faible en raison de leur manque de résistance à la corrosion, phénomène amplifié en cas d'utilisation en saumure.

Avec ce type de supports métalliques, la proportion de la surface inférieure du fromage exposée à l'air ambiant est de 40 % environ.

Dans le but d'augmenter cette proportion, des foncets avec circulation d'air forcée, formant une sorte de coussin d'air ont été construits, mais la complexité et le coût du système en ont limité le développement.

En fin d'affinage, le fromage est généralement transféré sur un support en bois inséré dans une palette de stockage appelée aussi "palette de froid". Ici encore le fromage doit être retourné.

Le support selon l'invention permet de remédier aux divers inconvénients précédemment cités.

En phase d'acidification, il assure l'écoulement du lactosérum de la face inférieure du fromage, empêchant le développement ultérieur de moisissures et de micro-organismes parasites. Il imprime également sur celle-ci un relief favorisant la résistance et l'aspect de la croûte du fromage. Il permet ensuite la libre circulation de la saumure sur la face supérieure du fromage, garantissant une bonne homogénéité de salage. Il assure enfin la ventilation optimum de la face inférieure du fromage durant l'affinage et le stockage, évitant tous risques de contamination bactériologique, toutes formations de moisissures, rendant ainsi inutile le brossage lors du retournement.

Il se caractérise également par une excellente résistance à la corrosion, aux chocs mécaniques et aux déformations dues au poids du fromage.

Pour atteindre au moins certains des objectifs ci-dessus, le support selon la présente invention comprend un treillis selon la revendication 1.

Le revêtement du support selon l'invention est de préférence en une résine thermodurcissable, notamment du type vinylester, en une résine thermoplastique, notamment en polypropylène, ou en élastomère, notamment en polyuréthane ou silicone.

De préférence, les fils de trame sont rectilignes et tendus de telle sorte que les fils de chaîne qui les contournent forment des saillies.

Dans une variante avantageuse, le treillis est composé de fils de trame et/ou de chaine plats.

Selon l'invention, les fils formant le treillis peuvent avantageusement être des fibres à haute résistance mécanique, notamment en verre, carbone, bore, aramide ou en fibres synthétiques notamment en polyester ou polyamide, ou des fils métalliques.

L'armature périphérique du support de l'invention peut avantageusement comprendre une enveloppe extérieure en un matériau résistant aux chocs et aux frottements, cette enveloppe pouvant être composée d'un feutre notamment en fibres polyester imprégné par la matière synthétique formant ledit revêtement.

Dans une variante de réalisation, l'armature comprend un anneau de préférence métallique et des fibres imprégnées de ladite matière synthétique qui contournent l'anneau métallique et dans lesquels le bord périphérique du treillis est noyé.

L'armature du support de fromages selon l'invention peut présenter une forme quelconque. Dans une variante intéressante, la forme extérieure de la section de l'armature est symétrique par rapport au plan du treillis et présente des surfaces opposées inclinées vers le treillis de manière à former un V, des surfaces parallèles prolongeant vers l'extérieur les branches de ce V et une paroi périphérique rejoignant ces deux surfaces parallèles.

Dans une variante, l'armature comprend une partie en saillie par rapport au treillis dans laquelle sont ménagés des orifices de fixation.

Selon l'invention, le support peut comprendre un plateau porté par l'armature périphérique et situé à distance du treillis, ce plateau étant incliné et l'armature présentant au moins un orifice de sortie communiquant avec l'espace séparant le plateau et le treillis.

Dans une autre variante, le support comprend deux treillis fixés sur ladite armature, ces treillis étant disposés parallèlement et à distance l'un de l'autre, ainsi qu'une cloison de séparation dont le bord périphérique est solidaire de ladite armature, cette cloison étant inclinée par rapport aux treillis et l'armature présentant des orifices de sortie communiquant avec les deux espaces séparés par ladite cloison de séparation.

Selon l'invention, le treillis peut être, au moins d'un côté, recouvert d'un filtre dont les bords sont insérés dans ladite armature. Ce filtre est avantageusement en polyoléfine notamment polypropylène.

La présente invention sera mieux comprise à l'étude de différents supports de fromages décrits à titre non limitatifs et illustrés par le dessin sur lequel :
- la figure 1 représente une vue en coupe d'un support de fromages ;
- la figure 2 représente une vue de dessus du support de fromages de la figure 1 ;
- la figure 3 représente une vue en coupe d'un treillis;
- la figure 4 représente une vue de dessus du treillis de la figure 3 ;
- la figure 5 représente une vue en coupe d'un second support de fromages ;
- la figure 6 représente une vue en coupe d'un troisième support de fromages ;
- la figure 7 représente une vue en coupe d'un quatrième support de fromages ;
- et la figure 8 représente une vue en coupe d'un cinquième support de fromages.
- et la figure 9 représente une vue agrandie en coupe d'un treillis.

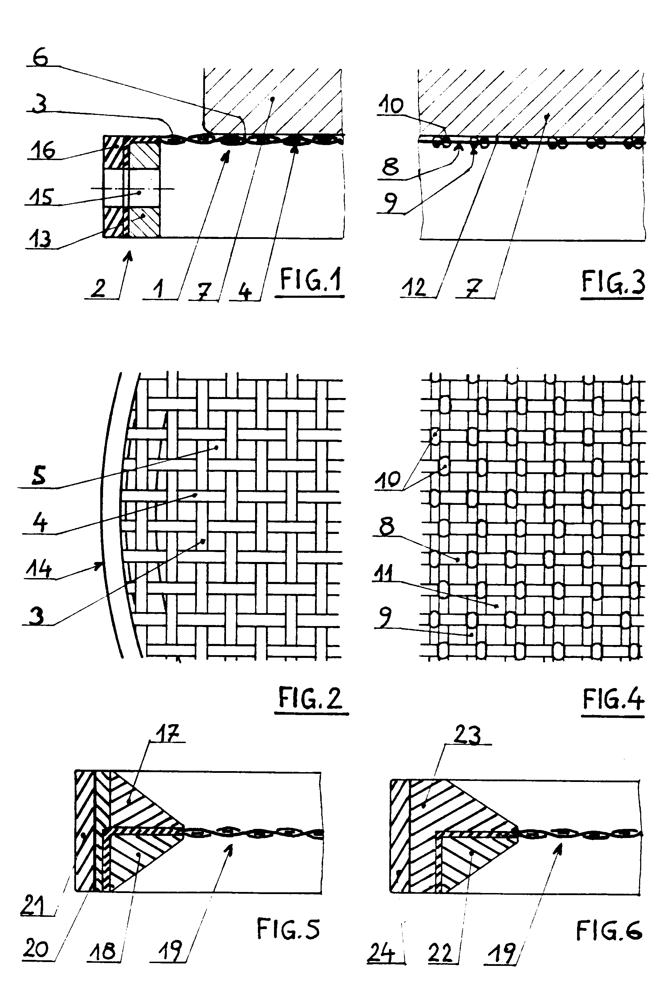

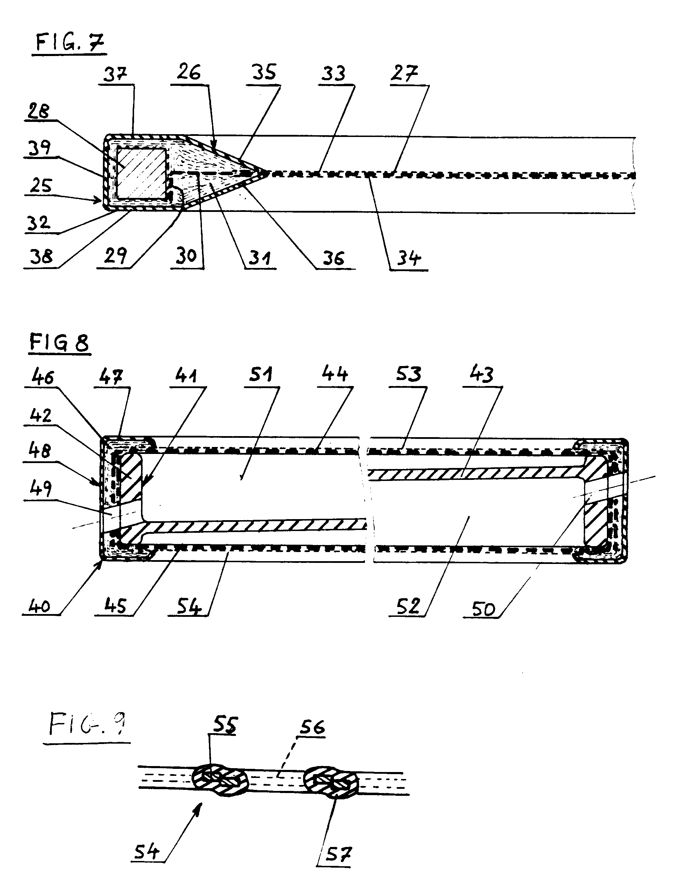

Le support de fromage représenté sur les figures 1 et 2 comporte un réseau de multifibres assemblées à haut module d'élasticité entrecroisées, noyées dans une matrice en résine de synthèse anti corrosion, formant un treillis 1 indéformable, fortement tendu, rendu solidaire d'une armature rigide 2 à l'aide d'une matrice de même nature.

Le treillis est constitué à l'aide d'une machine à tisser, à la manière d'un tissu dont les fils de chaîne 3, c'est-à-dire l'ensemble plan des fils parallèles dans le sens de la longueur du tissu et les fils de trame 4, c'est-à-dire les fils disposés dans le sens de la largeur du tissu seraient espacés de façon à aménager des vides 5 entre eux.

Les fils de chaîne 3 et les fils de trame 4 sont assemblés entre eux suivant un schéma d'entrecroisement que l'on nomme armure. L'armure toile ou taffetas, où les fils de chaîne et les fils de trame s'entrecroisent alternativement est utilisée préférentiellement. Cependant, d'autres armures telles que sergé, satin, unidirectionnelles peuvent être utilisées.

Dans une première forme de réalisation destinée à l'acidification et au saumurage, le treillis est composé de fils de chaîne 3 et de fils de trame 4 identiques en multifibres assemblées.

Les monofilaments peuvent être en matière synthétique : polyester, polyamide ou polyoléfine ou en métal et les multifibres en matières identiques aux monofilaments ou en verre, carbone, bore, aramide, ou autres matériaux ayant ces propriétés.

Le diamètre et l'espacement des fils de chaîne 3 et des fils de trame 4 est choisi de telle sorte que la reproduction de leur relief sur la face du fromage en appui, encore molle à ce stade de la fabrication, soit semblable au relief imprimé par une toile de lin traditionnelle. Celle-ci, interposée dans la technique traditionnelle entre le fromage et le support en bois, sert à drainer le lactosérum. D'autre part, elle imprime sur le fromage des stries croisées formées par la chaîne et la trame contribuant à augmenter la surface de la croûte et par conséquent sa résistance. Cette technique n'est pratiquement plus employée en raison de son coût.

L'emploi de fils de chaîne 3 et de trame 4 d'un diamètre de 0,6 mm, également répartis sens chaîne et sens trame suivant une densité de cinq fils au centimètre permet d'obtenir le résultat escompté sur la face du fromage en appui, l'autre face étant imprimée par retournement. Le relief ainsi obtenu est figé ensuite au saumurage, celui-ci ayant la particularité de durcir la surface du fromage.

Avantageusement, le treillis est imprégné d'un revêtement formé par une couche de résine thermodurcissable anticorrosion liant entre eux les fils de chaîne et les fils de trame. Cette imprégnation présente d'autres avantages : suppression de la chaîne et de la trame, amélioration du glissement du fromage lors des transferts et protection des fils polyester contre la dégradation due à l'action des produits de lavage basiques et à l'hydrolyse.

Avantageusement, la résine thermodurcissable anticorrosion enmployée est de type vinylester. D'autres résines telles que phénoliques, polyester, epoxydes ou encore des élastomères type polyuréthane alimentaire ou silicone peuvent être utilisées.

Le même type de résine est employé dans les différentes formes de réalisation qui vont suivre.

Dans une autre forme de réalisation destinée à l'affinage et au stockage, l'espacement des fils de chaîne 3 et des fils de trame 4 est plus important. Ceci est rendu possible par le durcissement de la surface du fromage au cours du saumurage, comme vu précédemment, qui empêche le marquage en surimpression d'un relief non souhaitable. Cette densité moindre en chaîne et en trame a pour résultat d'augmenter l'aération de la face inférieure du fromage et de diminuer le coût du treillis.

Le treillis selon la présente invention peut être constitué de fils de chaîne 3 et de fils de trame 4 identiques en roving ayant de préférence une largeur de 3 mm et une épaisseur de 0,4 mm. Leur espacement bord à bord égal détermine des ouvertures 5 carrées de 5 mm de côté.

L'imprégnation de plusieurs couches de résine anticorrosion permet d'augmenter l'amplitude du relief du treillis et par conséquent d'aménager des espaces complémentaires 6 de passage d'air entre le fromage 7 et le treillis 1. La proportion de la surface de fromage en contact avec le treillis est ainsi réduite à 30 % environ, soit 70 % environ au contact de l'air ambiant.

Dans la forme de réalisation représentée sur les figures 3 et 4, également destinée à l'affinage et au stockage, la surface du fromage en appui est encore plus réduite et la résistance à la déformation du treillis est augmentée.

Les fils ou rovings de trame 8 ont préférentiellement une largeur de 3 mm et une épaisseur de 0,4 mm, leur espacement bord à bord est de 5 mm. Les fils de chaîne 9 ont préférentiellement une largeur de 1,5 mm et une épaisseur de 0,4 mm. Deux fils de chaîne disposés côte à côte sur une largeur de 3 mm s'entre-croisent alternativement avec les fils de trame.

Entre deux groupes de deux rovings de chaîne, un espace de 5 mm est réservé. Ce qui détermine des ouvertures 11 de 5 mm x 5 mm. La plus grande souplesse des fils de chaîne 9 permet leur entrecroisement avec les fils de trame 8 sans déformer ceux-ci qui restent plats et tendus, leur conférant ainsi une grande résistance à la déformation engendrée par le poids du fromage. Après imprégnation de quatre couches de résine thermodurcissable, les surfaces recto et verso du treillis présentent des alignements de saillies 10 alternées aux bords arrondis, d'une largeur de 1,5 mm et d'une longueur de 5 mm environ formées par la juxtaposition des fils de chaîne 9 et de trame 8 et amplifiées par l'épaisseur de la résine. Le fromage repose sur ces saillies 10 et l'aération de sa surface inférieure est assurée par les ouvertures 11 produites par l'espacement entre fils de chaîne 9 et fils de trame 8 ainsi que par les canaux 12 formés entre les alignements des saillies 10 par les différences de niveau entre la face du fromage 7 en appui sur les saillies 10 et la partie supérieure des fils de trame 8. La surface inférieure du fromage est ainsi ventilée à 90 % environ ce qui exclue toute formation de moisissure, réduit le nombre de retournements à un seul et évite tout brossage en cours d'affinage. La faible pression exercée par les saillies 10 sur le fromage 7, soit environ 0,2 daN/cm² n'endommage pas celui-ci. D'autre part, la forme arrondie des saillies 10 permet le glissement du fromage 7 sans arrachage de matière grasse lors des transferts.

Dans le cas d'un support de fromage fixe tel que représenté sur la figure 1, c'est-à-dire solidaire d'une palette ou d'un casier, l'armature rigide 2 est constituée d'un anneau circulaire 13 exécuté à partir d'un fer plat de 25 mm de large et de 8 mm d'épaisseur environ roulé sur chant sur un diamètre extérieur 14 de 850 mm environ, soudé et galvanisé. Cet anneau est percé de trous de fixation 15.

Le treillis 1 fortement tendu est rabattu sur la face extérieure de l'anneau 13 et pris en sandwich entre celui-ci et une ceinture extérieure 16 servant à l'assemblage et à la protection du treillis 1 contre les chocs.

La ceinture extérieure 16 est de préférence constituée d'un profilé en polypropylène ou en polyéthylène de 5 mm d'épaisseur et de 25 mm de largeur environ entoilé sur la face interne afin d'assurer une bonne liaison entre la matière plastique antiadhérente et la fibre du treillis, après imprégnation de la résine.

La ceinture extérieure 16 peut être également en acier galvanisé, en acier inoxydable ou en duraluminium. Elle peut être également constituée d'un premier enroulement d'un ruban de fibre de verre tissé suivant une armure unidirectionnelle, très résistant à la traction, enroulé sur une épaisseur de 2 mm environ et d'un deuxième enroulement constitué d'un feutre polyester très résistant aux chocs, enroulé sur une épaisseur de 3 mm environ.

L'ensemble est rendu solidaire par l'imprégnation d'une résine thermodurcissable anticorrosion comme décrit précédemment, l'imprégnation pouvant s'effectuer par trempage ou par tout autre moyen connu. L'imprégnation globale du treillis et de l'armature garantit la tenue anticorrosion de l'ensemble.

Dans une autre forme de réalisation, l'armature 2 pourrait être-de forme polygonale.

Dans le cas d'un support de fromage mobile, le treillis, afin d'être préservé des chocs, ne doit jamais entrer en contact avec la face d'appui de l'armature, quelque soit le côté supportant le fromage. Cette face d'appui peut être un élément de transfert ou de stockage : convoyeur, fourche de manutention, palette ou casier. D'autre part, le fromage doit pouvoir être extrait indifféremment de l'une des deux faces du treillis par glissement, ce qu'interdit le support fixé décrit précédemment, son armature 2 proéminente côté envers empêchant cette manoeuvre.

Ces deux impératifs conduisent à l'emploi d'une armature ayant une forme identique par rapport aux deux faces du treillis, chacune de ces faces étant reliée par un pan incliné périphérique au bord de l'armature.

Celle-ci est préférentiellement de forme circulaire, mais elle peut être aussi polygonale.

Suivant la forme de réalisation de la figure 5, l'armature est constituée de deux anneaux en acier galvanisé, roulé et soudé, identiques 17 et 18, dont la section est un triangle rectangle ayant un côté vertical extérieur de 15 mm environ et un côté horizontal de 20 mm environ. Ces deux anneaux sont disposés symétriquement par rapport au treillis 19, leurs côtés de 20 mm venant en appui sur celui-ci. Le treillis fortement tendu 19, est rabattu sur le côté extérieur de l'anneau inférieur 18. Un ruban en tissu de verre, d'une hauteur de 32 mm environ, recouvrant la face externe de l'anneau supérieur 17 et la partie rabattue du treillis 19 est enroulé sur une épaisseur de 3 mm environ. Il est recouvert d'une ceinture 21 en polypropylène ou en polyéthylène d'une épaisseur de 5 mm environ entoilée côté intérieur ou d'un enroulement d'un ruban de feutre en fibre polyester, le tout étant imprégné d'une résine anticorrosion, comme décrit précédemment.

Suivant une autre forme de réalisation représentée sur la figure 6, l'armature est constituée d'un anneau inférieur 22 en acier profilé, roulé, soudé et galvanisé dont la section a la forme d'un triangle rectangle ayant un côté horizontal de 20 mm environ sur lequel le treillis 19 repose et un côté vertical de 15 mm environ sur lequel le treillis 19 est rabattu.

Elle comporte également un anneau supérieur 23 en acier profilé, roulé, soudé et galvanisé comportant une partie triangulaire symétrique à l'anneau inférieur 22 jouxtant une partie rectangulaire d'une hauteur de 32 mm environ et d'une largeur de 10 mm environ dont le sommet est dans le même plan que le sommet de la partie triangulaire. La partie externe est composée d'un bandage antichoc 24 constitué d'une ceinture en polyéthylène ou en polypropylène entoilée sur sa face interne, d'une épaisseur de 5 mm environ ou d'un enroulement en feutre de fibres polyester d'une épaisseur de 3 mm environ imprégné de résine thermodurcissable.

L'anneau supérieur 23 est emboîté sur l'anneau 22, le treillis tendu étant pris en sandwich sur 20 mm de partie horizontale et sur 15 mm de partie verticale.

L'ensemble est alors imprégné d'une résine thermo durcissable anticorrosion comme décrit précédemment.

Suivant une variante, les anneaux 17, 18, 21 et 22 sont réalisés en matériaux composites par enroulement filamentaire en employant de la fibre de verre ou de carbone, bore, aramide et une résine thermodurcissable anticorrosion. Les anneaux 17, 18, 21 et 22 pourraient également être réalisés en acier inoxydable ou en duraluminium.

En se reportant à la figure 7, on va maintenant décrire un autre mode de réalisation d'un support pour fromages repéré d'une manière générale par la référence 25.

Ce support 25 est réversible et comprend une armature périphérique annulaire repéré d'une manière générale par la référence 26 qui porte un treillis central 27. Ce treillis 27 peut présenter l'une quelconque des structures décrites à propos des exemples précédents.

L'armature périphérique 26 comprend un noyau annulaire 28 de section carrée qui peut être en tout matériau et de préférence en métal, éventuellement creux.

Le bord périphérique 29 du treillis 27 est rabattu contre la face intérieure du noyau 28, le treillis 27 s'étendant dans le plan médian de ce noyau.

La partie périphérique 30 du treillis 27 et le noyau annulaire 28 sont entourés d'une masse 31 composée de fibres de verre, éventuellement de rovings, imprégnées de résine synthétique anticorrosion.

Cette masse 31 est complètement entourée par un feutre en fibres polyesther 32 également imprégné de résine, qui constitue une enveloppe extérieure pour l'armature périphérique 25 résistante aux chocs et aux frottements.

On voit également que, de part et d'autre du treillis 27 et contre ce dernier, sont prévus des filtres 33 et 34 en résine synthétique dont les bords périphériques sont, comme la partie périphérique 30 du treillis 27, noyés dans la masse 31.

Dans une variante de fabrication du support 25 représenté sur la figure 7, on enveloppe d'une couche de fibres le noyau annulaire 28 et on l'imprègne de résine thermodurcissable. On tend le treillis 27 composé de fils de chaîne et de trame, également imprégné et enveloppé de résine thermodurcissable. Lors de la polymérisation de la résine thermodurcissable, le bord rabattu 29 du treillis se lie aux fibres entourant le noyau 28. On forme la masse de fibres imprégnée de résine 31 et son enveloppe 32. On dispose l'armature périphérique 26 entre deux pièces annulaires d'un moule et on serre. Après polymérisation, on extrait l'armature périphérique 26 du moule. Le support 25 est alors fabriqué et est tel qu'il ne présente en aucun endroit de son treillis 27 et de son armature 26 des interstices.

Comme on le voit sur la figure, en section, la forme extérieure de l'armature 26 est symétrique par rapport au plan du treillis 27 et présente des surfaces opposées inclinées 35 et 36 vers le treillis 27 de manière à former un V, des surfaces parallèles 37 et 38 prolongeant vers l'extérieur les branches 35 et 36 de ce V et une paroi périphérique extérieure 39 rejoignant ces surfaces parallèles 37 et 38. Grâce à ces formes, le support de fromages 25 peut être retourné pour recevoir sur la face supérieure du treillis 27 un fromage tout en permettant, des deux côtés, l'extraction latérale du fromage par glissement sur la face du treillis 27 et de l'armature 26, le fromage glissant sans rencontrer d'obstacles sur les surfaces 35, 37 ou 36, 38 de cette armature.

En se reportant à la figure 8, on va maintenant décrire un autre mode de réalisation d'un support de fromages repéré d'une manière générale par la référence 40, qui est également réversible.

Ce support 40 comprend une structure de base repérée d'une manière générale par la référence 41 qui comprend un anneau 42 de section rectangulaire dans le sens de son axe ainsi qu'un plateau 43 à l'intérieur de cet anneau 42 et dont le bord périphérique est solidaire de cette anneau 42. L'épaisseur de ce plateau 43 est très inférieure à la dimension axiale de l'anneau 42 et est inclinée par rapport à l'axe de ce dernier.

Cette structure de base 42 est composée de fibres imprégnées de résine par exemple thermodurcissable et est de préférence fabriquée par moulage.

Le support 40 comprend également deux treillis 44 et 45 qui recouvrent les deux faces opposées radiales de l'anneau 42, dont les bords sont rabattus sur la face extérieure de cet anneau 42.

Les faces extérieure de l'anneau 42 sont enveloppées par une masse 46 de fibres imprégnées de résine par exemple thermodurcissable, cette masse 46 étant entourée par une enveloppe extérieure 47 formée d'un feutre imprégné de résine par exemple thermodurcissable.

Ainsi, l'anneau 42 de la structure de base 41, la masse 46 et l'enveloppe 47 constitue une armature périphérique repérée d'une manière générale par la référence 48, qui porte les treillis opposés et parallèles 44 et 45.

De plus, dans cette armature périphérique 48, sont ménagés des orifices traversant 49 et 50 qui débouchent respectivement dans les espaces 51 et 52 séparant le plateau 43, qui constitue une cloison intérieure respectivement, et les treillis 44 et 45.

Pour fabriquer le support 40, représenté sur la figure 8, on peut procéder de la manière suivante.

On fabrique tout d'abord la structure support 41. On tend, en ayant rabattu ses bords périphériques contre la face extérieure de l'anneau 42, le treillis 45 imprégné de résine thermodurcissable. Lorsque ce treillis est polymérisé et fixé sur l'anneau 42, on procède de la même manière pour monter le treillis opposé 44.

On confectionne la masse 46 et son enveloppe 47. On dispose l'armature périphérique 48 ainsi constituée dans un moule. Lorsque cette masse 46 et l'enveloppe 47 sont polymérisés, on extrait le support 40 du moule qui est alors fabriqué. Puis on perce les trous 49 et 50.

Bien entendu, comme dans l'exemple précédent, on peut disposer sur les faces extérieures des treillis 44 et 45 des filtres 53 et 54 dont les bords périphériques sont noyés dans la masse 46.

Lorsqu'un fromage est disposé sur le treillis 44 ou sur le treillis 45, le liquide qui s'en écoule lors de sa fabrication, est dévié par la cloison intérieure 43 pour être évacué par les orifices 49 ou les orifices 50, à la périphérie du support 40, de manière à ne pas tomber ou goutter sur le fromage qui serait disposé sur un autre support en-dessous du support 40.

Bien entendu, le support 40 ne pourrait présenter que l'un des treillis 44 ou 45 et présenter le même avantage.

En se reportant à la figure 9, on voit qu'on a représenté, en vue agrandie et en coupe, un treillis repéré d'une manière générale par la référence 54 illustrant une structure adaptée pour constituer les treillis utilisés dans les exemples décrits précédemment.

Ce treillis 54 comprend des fils de trame 55 composés respectivement de deux fibres et des fils de chaîne 56.

Comme on l'a vu, les fils de trame et les fils de chaîne 55 et 56 sont enrobés et imprégnés par une résine choisie parmi les résines proposées précédemment. Cette résine constitue un revêtement qui supprime les interstices et donne un aspect arrondie aux mailles du treillis 54 et qui offre à ce treillis des surfaces extérieures lisses. Un tel treillis 54 et l'une des armatures périphériques décrites précédemment, également recouverte d'une résine constituant un revêtement, permet d'obtenir un support de fromage de présentant aucun interstice et présentant des surfaces extérieures lisses.

## Revendications

1. Support de fromages, pour notamment l'acidification, le saumurage, l'affinage ou le stockage de ces derniers, comprenant un treillis (1) tissé et tendu, à fils de chaîne et de trame qui s'entrecroisent et dont le bord périphérique est fixé sur une armature périphérique rigide (2), comportant un revêtement (57) en une matière synthétique anticorrosion qui enrobe ou imprégne le treillis et au moins une partie de l'armature périphérique de manière à constituer une matrice organique liant entre eux les fils de chaîne et les fils de trame du treillis et supprimant les interstices.

2. Support de fromages selon la revendication 1, caractérisé par le fait que le revêtement (57) est en une résine thermodurcissable, notamment du type vinylester.

3. Support de fromages selon la revendication 1, caractérisé par le fait que le revêtement (57) est en une résine thermoplastique, notamment en polypropylène.

4. Support de fromages selon la revendication 1, caractérisé par le fait que le revêtement (57) est en élastomère, notamment en polyuréthane ou silicone.

5. Support de fromages selon l'une quelconque des revendications précédentes, caractérisé par le fait que les fils de trame (3) sont rectilignes et tendus de telle sorte que les fils de chaîne (4) qui les contournent forment des saillies.

6. Support de fromages selon l'une quelconque des revendications précédentes, caractérisé par le fait que le treillis est composé de fils de trame et/ou de chaine plats.

7. Support de fromages selon l'une quelconque des revendications précédentes, caractérisé par le fait que les fils formant le treillis (1) sont des fibres à haute résistance mécanique, notamment en verre, carbone, bore, aramide ou en fibres synthétiques notamment en polyester ou polyamide ou des fils métalliques.

8. Support de fromages selon l'une quelconque des revendications précédentes, caractérisé par le fait que l'armature périphérique (8) comprend une enveloppe extérieure (16) en un matériau résistant aux chocs et aux frottements.

9. Support de fromages selon la revendication 8, caractérisé par le fait que l'enveloppe (16) est composée d'un feutre notamment en fibres polyester imprégné par la matière synthétique formant ledit revêtement.

10. Support de fromages selon l'une quelconque des revendications précédentes, caractérisé par le fait que l'armature (2) comprend un anneau de préférence métallique (28) et des fibres imprégnées de ladite matière synthétique qui contournent l'anneau métallique et dans lesquelles le bord périphérique (27) du treillis est noyé.

11. Support de fromages selon l'une quelconque des revendications précédentes, caractérisé par le fait que la forme extérieure de la section de l'armature (25) est symétrique par rapport au plan du treillis (27) et présente des surfaces opposées inclinées vers le treillis de manière à former un V, des surfaces parallèles prolongeant vers l'extérieur les branches de ce V et une paroi périphérique rejoignant ces deux surfaces parallèles.

12. Support de fromages selon l'une quelconque des revendications précédentes, caractérisé par le fait que l'armature (2) comprend une partie en saillie par rapport au treillis dans laquelle sont ménagés des orifices de fixation (15).

13. Support de fromages selon l'une quelconque des revendications précédentes, caractérisé par le fait qu'il comprend un plateau porté par l'armature périphérique et situé à distance du treillis, ce plateau étant incliné et l'armature périphérique présentant au moins un orifice de sortie communiquant avec l'espace séparant le plateau et le treillis.

14. Support de fromages selon l'une quelconque des revendications précédentes, caractérisé par le fait qu'il comprend deux treillis (44, 45) fixés sur ladite armature, ces treillis étant disposés parallèlement et à distance l'un de l'autre, ainsi qu'une cloison de séparation (43) dont le bord périphérique est solidaire de ladite armature, cette cloison étant inclinée par rapport aux treillis et l'armature présentant des orifices de sortie communiquant avec les deux espaces séparés par ladite cloison de séparation.

15. Support de fromages selon l'une quelconque des revendications précédentes, caractérisé par le fait que le treillis (33) est, au moins d'un côté, recouvert d'un filtre (34) dont les bords sont insérés dans ladite armature.

16. Support de fromages selon la revendication 15, caractérisé par le fait que le filtre est en polyoléfine notamment polypropylène.

## Claims

1. Support for cheeses, in particular for the acidification, brining, maturing or storage of the latter, comprising a woven and stretched mesh (1) with warp and weft threads which intersect and the peripheral edge of which is secured on a peripheral reinforcement (2) including a coating (57) of an anti-corrosion, synthetic material which coats or impregnates the mesh and at least part of the peripheral reinforcement so as to form an organic matrix connecting together the warp threads and the weft threads of the mesh and eliminating interstices.

2. Support for cheeses according to Claim 1, characterized in that the coating (57) is made of a thermosetting resin, in particular of the vinyl ester type.

3. Support for cheeses according to Claim 1, characterized in that the coating (57) is made of a thermoplastic resin, in particular of polypropylene.

4. Support for cheeses according to Claim 1, characterized in that the coating (57) is made of an elastomer, in particular of polyurethane or silicone.

5. Support for cheeses according to any one of the preceding claims, characterized in that the weft threads (3) [sic] are in a straight line and stretched in such a manner that the warp threads (4) [sic] which wind around them form projections.

6. Support for cheese according to any one of the preceding claims, characterized in that the mesh is composed of flat weft and/or warp threads.

7. Support for cheeses according to any one of the preceding claims, characterized in that the threads forming the mesh (1) are fibres of high mechanical strength, in particular glass, carbon, boron or aramid fibres or synthetic fibres, in particular of polyester or polyamide, or metal wires.

8. Support for cheeses according to any one of the preceding claims, characterized in that the peripheral reinforcement (8) comprises an external casing (16) of a shock- and friction-resistant material.

9. Support for cheeses according to Claim 8, characterized in that the casing (16) is composed of a felt, in particular of polyester fibres, impregnated with the synthetic material forming the said coating.

10. Support for cheeses according to any one of the preceding claims, characterized in that the reinforcement (2) comprises a preferably metal ring (28) and fibres impregnated with the said synthetic material which wind around the metal ring and in which the peripheral edge (27) of the mesh is embedded.

11. Support for cheeses according to any one of the preceding claims, characterized in that the external shape of the cross-section of the reinforcement (25) is symmetrical in relation to the plane of the mesh (27) and has opposite surfaces inclined towards the mesh so as to form a V, parallel surfaces extending outwards the branches of said V and a peripheral wall joining said two parallel surfaces.

12. Support for cheeses according to any one of the preceding claims, characterized in that the reinforcement (2) comprises a part which protrudes in relation to the mesh, in which part securing apertures (15) are provided.

13. Support for cheeses according to any one of the preceding claims, characterized in that it comprises a plate supported by the peripheral reinforcement and located at a distance from the mesh, said plate being inclined and the peripheral reinforcement having at least one outlet aperture communicating with the space separating the plate and the mesh.

14. Support for cheeses according to any one of the preceding claims, characterized in that it comprises two meshes (44, 45) secured on the said reinforcement, said meshes being arranged in parallel and at a distance from one another, and a separating partition (43), the peripheral edge of which is integral with the said reinforcement, said partition being inclined in relation to the meshes and the reinforcement having outlet apertures communicating with the two spaces separated by the said separating partition.

15. Support for cheeses according to any one of the preceding claims, characterized in that the mesh (33) is, at least on one side, covered with a filter (34), the edges of which are inserted in the said reinforcement.

16. Support for cheeses according to Claim 15, characterized in that the filter is made of polyolefin, in particular polypropylene.

## Patentansprüche

1. Horde für Käse, insbesondere für die Säuerung, das Salzen, das Reifen oder das Lagern der letzteren, umfassend ein gewebtes und gespanntes Flechtwerk (1) mit Kett- und Schußfäden, die sich kreuzen, und dessen peripherer Rand an einem starren, peripheren Stützgerüst (2) befestigt ist, umfassend eine Ummantelung (57) aus einem synthetischen Korrosionsschutzmaterial, das das Flechtwerk und wenigstens einen Teil des peripheren Stützgerüsts ummantelt oder imprägniert derart, daß eine organische Matrix gebildet wird, die die Kettfäden und die Schußfäden des Flechtwerks miteinander verbindet und die Zwischenräume aufhebt.

2. Käsehorde nach Anspruch 1, dadurch **gekennzeichnet,** daß die Ummantelung (57) aus einem warmaushärtenden Harz insbesondere vom Vinylestertyp ist.

3. Käsehorde nach Anspruch 1, dadurch **gekennzeichnet,** daß die Ummantelung (57) aus einem thermoplastischen Harz, insbesondere aus Polypropylen, ist.

4. Käsehorde nach Anspruch 1, dadurch **gekennzeichnet,** daß die Ummantelung (57) aus Elastomer, insbesondere aus Polyurethan oder Silicon, ist.

5. Käsehorde nach einem beliebigen der vorhergehenden Ansprüche, dadurch **gekennzeichnet,** daß die Schußfäden (3) geradlinig und gespannt sind, derart, daß die Kettfäden (4), die um sie herumführen, Vorsprünge bilden.

6. Käsehorde nach einem beliebigen der vorhergehenden Ansprüche, dadurch **gekennzeichnet,** daß das Flechtwerk aus flachen Kett- und/oder Schußfäden besteht.

7. Käsehorde nach einem beliebigen der vorhergehenden Ansprüche, dadurch **gekennzeichnet,** daß die das Flechtwerk (1) bildenden Fäden Fasern mit hoher mechanischer Festigkeit, insbesondere aus Glas, Kohlenstoff, Bor, Aramid, oder aus synthetischen Fasern, insbesondere aus Polyester oder Polyamid, oder metallische Fasern sind.

8. Käsehorde nach einem beliebigen der vorhergehenden Ansprüche, dadurch **gekennzeichnet,** daß das periphere Stützgerüst (8) eine Außenummantelung (16) aus einem stoßfesten und reibungsbeständigen Material umfaßt.

9. Käsehorde nach Anspruch 8, dadurch **gekennzeichnet,** daß die Ummantelung (16) aus einem Filz, insbesondere aus Polyestherfasern, besteht, der mit dem die Ummantelung bildenden synthetischen Material imprägniert ist.

10. Käsehorde nach einem beliebigen der vorhergehenden Ansprüche, dadurch **gekennzeichnet,** daß das Stützgestell (2) einen vorzugsweise metallischen Ring (28) und mit dem synthetischen Material imprägnierte Fasern umfaßt, die um den metallischen Ring herum führen und in denen der periphere Rand (27) des Flechtwerks eingebettet ist.

11. Käsehorde nach einem beliebigen der vorhergehenden Ansprüche, dadurch **gekennzeichnet,** daß die Außenform des Querschnitts des Stützgestells (25) in bezug auf die Ebene des Flechtwerks (27) symmetrisch ist, und gegenüberliegende Oberflächen aufweist, die zu dem Flechtwerk derart geneigt sind, daß sie ein V bilden, parallele Flächen, die die Schenkel dieses V nach außen verlängern, und eine periphere Wand, die sich mit den peripheren Flächen vereinigt.

12. Käsehorde nach einem beliebigen der vorhergehenden Ansprüche, dadurch **gekennzeichnet,** daß das Stützgestell (2) einen in bezug auf das Flechtwerk vorspringenden Teil umfaßt, in dem Befestigungsöffnungen (15) ausgespart sind.

13. Käsehorde nach einem beliebigen der vorhergehenden Ansprüche, dadurch **gekennzeichnet,** daß sie eine Platte umfaßt, die durch das periphere Stützgestell getragen ist und sich mit Anstand vom Flechtwerk befindet, wobei die Platte geneigt ist und das periphere Stützgestell wenigstens eine Ausgangsöffnung aufweist, die mit den die Platte und das Flechtwerk trennenden Raum in Verbindung steht.

14. Käsehorde nach einem beliebigen der vorhergehenden Ansprüche, dadurch **gekennzeichnet,** daß sie zwei Flechtwerke (44, 45), die an dem Stützgestell befestigt sind, wobei die Flechtwerke parallel und mit Abstand voneinander angeordnet sind, sowie eine Trennwand (43) umfaßt, deren peripherer Rand mit dem Stützgestell verbunden ist, wobei die Trennwand in bezug auf das Flechtwerk geneigt ist und das Stützgestell Ausgangsöffnungen aufweist, die mit den beiden durch die Trennwand getrennten Räumen in Verbindung stehen.

15. Käsehorde nach einem beliebigen der vorhergehenden Ansprüche, dadurch **gekennzeichnet,** daß das Flechtwerk (33) wenigstens auf einer Seite mit einem Filter (34) überdeckt ist, dessen Ränder in dem Stützgestell eingefügt sind.

16. Käsehorde nach Anspruch 15, dadurch **gekennzeichnet,** daß der Filter aus Polyolefin, insbesondere aus Polypropylen, ist.
